# EUROPEAN PATENT SPECIFICATION

(11) **EP 3 665 409 B1**
(45) Date of publication and mention of the grant of the patent: **23.06.2021**
(21) Application number: 18762019.0
(22) Date of filing: 09.08.2018
(51) Int. Cl.: F16K 5/06, F16K 5/20

(54) **SEALING ASSEMBLY FOR BALL VALVES AND BALL VALVE COMPRISING SUCH A SEALING ASSEMBLY**
DICHTUNGSANORDNUNG FÜR KUGELVENTILE UND KUGELVENTIL MIT SOLCH EINER DICHTUNGSANORDNUNG
ENSEMBLE D'ÉTANCHÉITÉ POUR ROBINETS À TOURNANT SPHÉRIQUE ET ROBINET À TOURNANT SPHÉRIQUE MUNI D'UN TEL ENSEMBLE D'ÉTANCHÉITÉ

(30) Priority: 10.08.2017 WO PCT/IB2017/054874
(43) Date of publication of application: 17.06.2020
(73) Proprietor: Gasket International S.r.L., 24060 Cividino di Castelli Calepio (IT)
(72) Inventor: SCATTINI, Roberto, 24060 Credaro (IT)
(74) Representative: Contadin, Giorgio
(86) International application number: PCT/EP2018/071606
(87) International publication number: WO 2019/030317

(56) References cited:
- EP-A1- 2 478 275
- WO-A1-2013/021238
- JP-A- 2009 041 776
- US-A- 3 416 558
- US-A- 4 111 393
- US-A- 4 262 688
- US-A1- 2008 230 731
- US-A1- 2011 147 635
- US-A1- 2016 319 940

## Description

### FIELD OF THE INVENTION

The present invention relates to sealing valves used in the chemical, petrochemical, petroleum and natural gas extraction industry, in particular but not exclusively to ball valves for applications in which the pressure is in a range between 0 and 2500 Bar. In particular, the present invention relates to an improved sealing assembly for ball valves, preferably for valves of the *"trunnion"* type, and to a ball valve comprising such an improved sealing assembly. The sealing assembly according to the invention is particularly suited to small-size valves adapted to control high-pressure fluid, i.e. valves provided with a seat with diameter up to 101,6 mm (4 inches) with pressures up to 2500 Bar. In all cases, the sealing assembly according to the invention may be used also for ball valves of larger size than that indicated intended for even higher fluid flow rates and even lower pressures than those indicated above for small-size valves.

### BACKGROUND ART

In the petroleum and natural gas extraction industry, ball valves are used to achieve the fluid sealing (petroleum or natural gas) conveyed in a pipe. Ball valves, as known, comprise a valve body, a ball, which has the function of shutter to obstruct the fluid passage, and a seat coupled to the ball to achieve the fluid sealing. At least one sealing element acts between the seat and the ball of the valve to ensure the sealing of the valve and concurrently to be adapted to allow the relative movement between seat and ball in order to open and close the valve itself. The valve body and the seat are both internally hollow to define a passage for the fluid between an inlet section and an outlet section. When the valve is in the closed configuration, the ball obstructs the fluid passage between the inlet and the outlet section. In open configuration, the ball defines a gap which puts the sections into communication. In *"trunnion"* type valves, widely known in the field, the movement of the ball is supported by two opposite pins defining a rotation axis. The ball thus maintains a single degree of freedom in rotation with respect to the valve body. Such a rotation is permitted by means of an external actuator.

The working pressures for which these valves are designed are in a rather wide range, and vary according to the type of system for which they were intended. Many solutions have been developed in order to comply with the specifications of each system. Each solution provides for a valve with specific constructive features which make it suitable for a respective application. Valves named *"Single Piston Effect"* (SPE) and *"Double Piston Effect"* (DPE) valves are known in the field.

In a SPE valve, like in a DPE valve, a first seat and a second seat are included, respectively upstream and downstream of the ball with respect to the flow direction. In a SPE valve, the sealing of the valve is performed solely by the first seat, generally the one upstream of the ball with respect to the fluid flow. If the sealing of the first seat is compromised for any reason, in a SPE valve the second seat, i.e. the one downstream of the valve, must not provide sealing against the ball. On the contrary, the second seat is required to let the working fluid through, particularly if this is gas. This is in order to prevent the accumulation of pressurized fluid in the valve, which is potentially very dangerous. The same behavior is required also when the ball is turned to the closed configuration. In this case, the pressure inside the ball gap must be discharged downstream of the ball itself. According to the current standards, in case of a SPE valve, the necessary pressure for achieving the automatic opening (*"self-relieving"*) of the seat must be either lower than or equal to 10% of the working pressure.

On the contrary, in DPE type valves, if the first seat, i.e. the one upstream of the ball with respect to the flow direction, does not provide the sealing for any reason, the second seat, i.e. the one downstream of the ball, must provide the sealing. In order to obtain this result, as known in the prior art, the seat is configured so that the fluid is interposed between the seat and the closing of the valve body causing the thrust of the seat against the ball, so as to apply the sealing. In other words, in DPE type valves, the second seat has the function of hermetically closing the valve.

The valve types indicated above, defined as a function of the obtained technical effect or of the operating behavior, are thus known in the field, and different technical solutions can be found within such types. Substantially, in the current art, each valve is designed for its destination application by designing a specific geometry of the sealing assembly, meaning the whole of seat and sealing elements. Substantially, in order to make a SPE type valve or alternatively a DPE type valve, the manufacturer must design a specific configuration of the sealing assembly.

An example of sealing assembly of the prior art, possibly intended for an industrial ball valve, is disclosed in the document published as JP2009041776 A.

The solutions of known type are not functionally versatile. Indeed, currently, a seat designed for a SPE valve cannot be used in a DPE valve, and vice versa. Thus, the valve manufacturer must know the type of valve to be installed in advance and must procure the specific components according to whether the valve must be of Single Piston Effect or a Double Piston Effect type. So, as known in the prior art, the manufacturer must make and have available on stock two different sealing assemblies, one adapted to make SPE type valves and one adapted to make DPE valves.

In other words, interchangeable solutions are not known today on the market, which allow the manufacturer and others to make a single type of seat, thus reducing component volumes, in particular seats on stock, and which allow the user to modify the nature of a valve, e.g. passing from a Single Piston Effect to a Double Piston Effect or vice versa, simply by acting on the seat, without needing to modify the valve body and/or the closings in any way.

Numerous pipes may be provided in a system, each with specific flow rate and pressure conditions, provided with respective sealing valves. The valve to apply to each pipe must be established in the step of designing and the actually provided valve must be installed during the step of assembling. In addition to establishing the behavior required by the valve (DPE or SPE), the methods with which the sealing is achieved according to the operative conditions must be defined during the step of designing.

In particular, in the known solutions, seals with elastomer insert are used in applications in gas and hydraulic environment with low and high pressures. Such a sealing element, known in the prior art, generally consists of a rubber O-ring adapted to implement a hermetic closing between the seat and the ball. Such a rubber sealing element allows sealing also in case of a surface finish of the ball which is free from faults, or which in all cases displays a given surface roughness. In other words, the rubber O-ring allows to obtain the sealing with low manufacturing costs because it is not necessary to exasperate the tolerances, the surface finish or the shape errors of the ball.

However, the use of the O-ring as sealing element has some drawbacks, the first of which is the risk of extrusion of the seal, i.e. that in case of high working pressures, the O-ring itself is deformed and/or is partially expelled from its housing, with consequent failure cause by tearing. In such a condition, the valve cannot ensure the tightness of the sealing.

The fact of not being reliable for high fluid or gas pressure valves, meaning values higher than 100 bars already as high pressures, is a limit of the valves having the rubber O-ring as the only sealing element.

In order to improve the sealing of the valve also at higher fluid pressure valves, solutions which include an elastomeric ring having substantially triangular, more specifically delta-shaped cross section, (named delta-ring) as sealing element are known on the market. Examples of sealing obtained with delta-ring are described in patent applications WO 2013/02123238 and WO 2011/0343536 by the applicant.

Although improving the sealing at high temperatures, this solution is neither entirely satisfactory in contrasting the aforesaid drawbacks (extrusion/tearing). Although, as mentioned, the sealing elements made of elastomeric material may offer good sealing at low pressure, they appear unsuitable to work at high pressures, having a poor resistance to mechanical fatigue. Furthermore, because of the deformity of the material of which they are made, they may be extruded from the housing in which they are accommodated. The elastomer deteriorates even more rapidly in aggressive environments, as occurs above all in the treatment of hydrocarbons in gaseous form.

By the side of these solutions, valves are known in the field, which use thermoplastic material elements to achieve the seat-ball sealing. Examples of materials used are PTFE (with various compounds), PA, PEEK, POM, PCTFE and similar, very hard thermoplastic polymers. These sealing elements, or inserts, made of thermoplastic materials are typically inserted with interference in the respective housing contained on the valve seat. Therefore, the dimensional control of insert and housing is very important in the scope of designing of these sealing systems. Clamping means for fixing the position of the sealing element in the corresponding housing are used in many cases.

With respect to the use of rubber O-rings or delta-rings, the thermoplastic sealing elements avoid the metal-to-metal contact between seat and ball also with high working pressures because they are less easily deformable than rubber. On the other hand, a drawback connected to the use of thermoplastic materials is the need to have very low machining tolerances and/or misalignments in the assembly of the valve components and a very low surface roughness of the ball which must therefore be subjected to surface finishing by lapping in order to ensure good sealing. At the same time, the sealing elements made of thermoplastic material, currently in use, are not adapted to implement good sealing at low pressure.

In the field, and in particular in the gas extraction industry, the ball valves must operate on fluid in gaseous state, which may have low pressures or reach pressures the order of 450 bar or beyond. In order to allow both functions, some known solutions (also described in applications WO 2013/02123238 and WO 2011/0343536) use two sealing elements, one made of elastomeric material and other of thermoplastic material.

Thereby, at low pressures, sealing is ensured by the elastomeric material. At high pressures, sealing is allowed prevalently by the thermoplastic material sealing element. At the same time, the elastomeric material should have the function of compensating the elastic deformations of the valve ball generated by high fluid working pressures. However, the elastomeric material undergoes major deformations during the opening operations at maximum pressure, which puts the seal in high stress conditions until causing failure by tearing. The problem is further accentuated in the presence of aggressive environment. Therefore, the solution which combines a thermoplastic sealing element with an elastomeric sealing element also has strong limits of reliability and durability. Furthermore, these solutions require jobs which are complex for making housings intended to accommodate the sealing rings. With this regard, the delta-ring housing is very complex to be obtained, while the housing for the thermoplastic element requires restrictive tolerances. The assembly operations of the sealing assembly with two combined elements (one elastomeric and the other thermoplastic) also appear particularly complex.

With this regard, it has been seen that processing is particularly difficult in the case of "*small*"-sized ball valves, i.e. provided with a seat with diameter up to 4 inches. Because of the limited radial extension of the seat, and thus the limited material which constitutes it, defining the housings for the (thermoplastic-elastomeric) sealing elements is very complex, and for the same reasons the respective assembly is not very easy.

According to the considerations illustrated above, it is a main task of the present invention to provide an improved sealing assembly for a ball valve which allows to solve the drawbacks which afflict the sealing systems of type known in the prior art.

Within the scope of this task, it is the object of the present invention to provide an assembly for industrial ball valves which allows to obtain an excellent sealing both at low and at high pressures.

It is another object of the present invention to provide a sealing assembly which requires simpler seat processing and assembly operations than those required by the traditional solutions.

It is yet another object to provide a sealing assembly which allows to improve the sealing in particular working conditions, and in particular in gas or hydraulic environment which is subject to numerous and frequency opening and closing cycles at high pressure.

It is a further object of the present invention to provide a sealing assembly comprising a seat which is interchangeable, i.e. replaceable within the same valve body in order to modify the valve type, from SPE type valve to DPE type valve, and vice versa, without needing to modify or adapt the valve body in any manner.

It is a yet further object of the present invention to provide a sealing assembly which is particularly suited also for small-sized valves, i.e. ball valves the seat of which has a diameter up to 4 inches.

It is a not last object of the present invention to provide a sealing assembly which is reliable and easy to be manufactured at competitive costs.

### SUMMARY

The present invention thus relates to a sealing assembly for an industrial ball valve, wherein said valve comprises at least one valve body and a ball accommodated in said valve body. The sealing assembly according to the invention comprises at least one seat, which can be inserted in the valve body, which develops about a central axis defining an axial cavity for the passage of a pressurized fluid. Such a seat comprises a first part, which defines a first housing at a surface which faces towards the ball when the seat is installed in the valve body. Such a first housing comprises a closed bottom surface, which develops on a plane transversal to said central axis.

The sealing element further comprises a sealing element, made of thermoplastic material, to achieve the fluid sealing between the seat and the ball of the valve. Such a sealing element is ring-shaped and accommodated within the first housing. In particular, the assembly according to the invention is characterized in that the sealing element is accommodated with radial clearance in said first housing to float, with respect to the seat, along a direction parallel to the central axis when the seat is installed in the valve body and when the seat is internally crossed by the pressurized fluid.

According to the invention, the first housing is defined by a first outermost cylindrical surface and by an innermost cylindrical surface towards which an outermost surface and an innermost surface of said sealing element respectively face; said sealing element defines a circular housing in which a sealing ring is accommodated to achieve the sealing between said outermost surface of said first housing and said outermost surface of said sealing element.

Further, according to the invention, the seat also comprises a second part which is directly screwed onto the first part of the seat itself. One between said first part or said second part comprises a male threaded portion which is screwed directly into a female threaded portion of the other of said parts of said seat. Said second part comprises an anti-extrusion portion which prevents the extraction of the sealing element from the first housing during the step of opening of the valve.

The sealing assembly according to the present invention allows to completely eliminate the elastomeric material insert, entrusting the sealing exclusively to a sealing element made of thermoplastic material, thus solving the problems related to wear and to the fatigue behaviors which afflict the sealing elements made of elastomeric material and obtaining a thermoplastic material sealing element with extremely high sealing levels. By means of the sealing assembly, it is possible to achieve optimal sealing up to 2500 bar of pressure, thus reducing the problems of wear and fatigue deterioration. Indeed, when the valve is closed, as the pressure increases, the thrust of the sealing element against the ball, and thus of the sealing itself, increases. During the step of opening of the valve, the pressure is reduced and consequently the force which pushes the sealing element against the ball is also reduced, thus limiting the phenomena of wear and mechanical fatigue. At the same time, the possibility of relative movement of the sealing element with respect to the seat, due to the fact that the sealing element floats with respect to the first housing, ensures the compensation of the elastic deformation of the ball due to the pressure of the fluid.

The sealing assembly according to the present invention ensures solidity and reliability in terms of deterioration and equivalent performance of the elastomeric insert at low pressures. At the same time, the presence of the thermoplastic sealing element further ensures a lower friction, and thus a lower valve opening torque value with respect to the solution with elastomeric seal. It is worth noting that the sealing assembly according to the invention can be possibly applied also to PMSS *(Primary Metal Secondary Soft)* valves in which a metal-to-metal contact is provided between the front surface of the seat and the ball.

### LIST OF DRAWINGS

Further features and advantages of the present invention will become more apparent from the following detailed description provided by way of non-limiting example and shown in the accompanying drawings, in which:
- Figure 1 shows a section view of a ball valve comprising two sealing systems according to the present invention which act respectively upstream and downstream of the ball;
- Figure 2 is a cross section view according to a radial section plane of a ball valve comprising a first possible embodiment of the sealing assembly according to the present invention;
- Figures 3 and 4 are an overview and an exploded view of the sealing assembly installed in the valve in Figure 2, respectively;
- Figures 5 and 6 are enlargements of the sealing assembly in Figure 2;
- Figure 7 is a cross section according to a radial section plane of a ball valve of SPE (Single Piston Effect) type, comprising a second possible embodiment of the sealing assembly according to the present invention;
- Figure 8 is a cross section view according to a radial section plane of a ball valve of DPE (Double Piston Effect) type, on which an embodiment of the sealing assembly, alternative to the one shown in figure 7, is installed;
- Figure 9 is a cross section view according to a radial section plane of a ball valve, on which a first possible embodiment of the sealing assembly is installed;
- Figure 10 is a cross section view taken along a radial section plane of a ball valve, on which a fourth possible embodiment of the sealing assembly is installed;
- Figure 11 is an exploded view of the sealing assembly shown in Figure 10;
- Figure 12 is a cross section view according to a radial section of a ball valve, on which a fifth possible embodiment of the sealing assembly is installed;
- Figures from 13 to 17 are views related to further possible embodiments of components of a sealing assembly according to the present invention;

The same numbers and letters in the figures refer to the same elements or components.

### DETAILED DESCRIPTION OF THE INVENTION

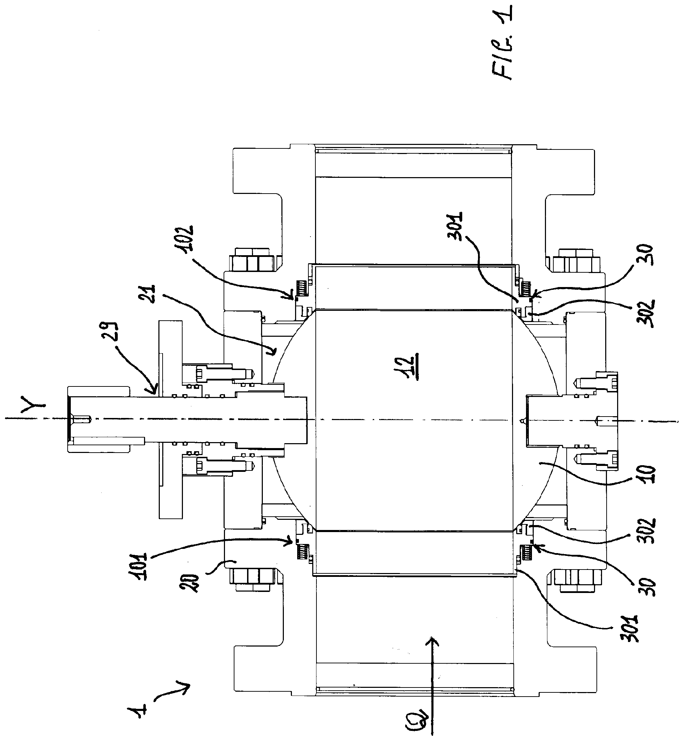

With particular reference to figure 1, a valve 1 of the *"trunnion"* type is shown, comprising a sealing assembly according to the present invention. The valve 1 is intended to be installed on a fluid pipe and comprises a body 20 which defines a housing 21, in which an internally hollow ball 10 is accommodated, which is adapted to close the fluid flow Q and create a passage gap 12 for the flow itself, as known for valves of this type. More precisely, the ball 10 turns between an open position, in which the flow Q crosses the passage gap 12, and a closed position, in which the flow Q itself is prevented. The rotation of the ball 10 occurs about a reference axis Y and may be performed by means of an actuator 29 according to a principle known per se.

The valve 1 shown comprises a first sealing assembly 101 and a second sealing assembly 102 operatively associated with the ball 10 to achieve the fluid sealing on opposite parts of the ball 10, respectively upstream and downstream of the fluid flow inside the valve. In particular, the two systems 101,102 achieve the sealing at least when the ball 10 is in closed condition. Hereinafter in this description, reference will be made to the first sealing assembly 101 which acts upstream of the ball 10, but the same considerations also apply to the sealing assembly 102 downstream thereof.

The sealing assembly 101 according to the invention comprises a seat 30 which is installed in the valve body 20. The seat 30 develops as a revolution solid around a central axis A and comprises an axial cavity 35 for the passage of a pressurized fluid (liquid or gas). The central axis A identifies the fluid flow direction, when the seat 30 is inserted in the valve body 20 and the valve 1 is open. The direction of flow is obviously established by the conditions of the system in which the valve is inserted.

Hereinafter in the description, the expression *"transversal plane"* identifies a plane which is substantially orthogonal to the central axis A. Similarly, the word *"transversal",* referred to a surface, means that such a surface develops on a transversal plane. The word *"transversal"* or *"radial",* referred to a direction, indicates that the direction is substantially orthogonal to the central axis A. The expression *"radial plane",* instead, means a plane containing the central axis A. Furthermore, the expression *"axial direction"* means a direction parallel to the central axis A.

Furthermore, hereinafter in the description, the words "front" and "rear" referred to different surfaces of the same component increase respectively a *"vicinal"* position and a "distal" position with respect to the ball 10 of the valve 20. Finally, the expressions *"outermost"* and *"innermost",* referred to different surfaces of the same component, may indicate a position which is radially *"furthest"* from and a radially *"closest"* to the central axis A, respectively.

The seat 30 comprises a first part 301 (hereinafter indicated also as main part 301 of the seat 30), which defines a first housing 31A defined at a front surface of the main part 301 of the seat 30. According to the definition indicated above, the word *"front"* indicates the surface of the main part 301 closer to the ball 10 when the seat 30 is installed in the valve 20.

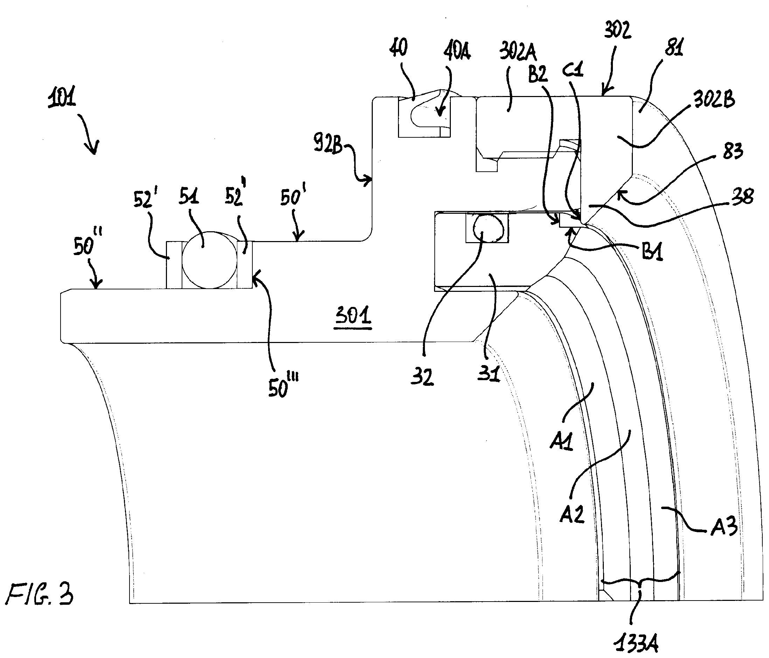

The first housing 31A faces towards said ball 10 when the seat 30 is installed in the valve body 20. The first housing 31A develops as a ring about the central axis A being defined by two cylindrical surfaces (see Figure 3) which are coaxial to the central axis A itself. The first housing 31A is further delimited by a bottom surface 310 which develops, preferably on a transversal plane. The bottom surface 310 is closed so that the first housing 31A is open only on the side of the front surface of the seat 30, i.e. on the side which faces the ball 10.

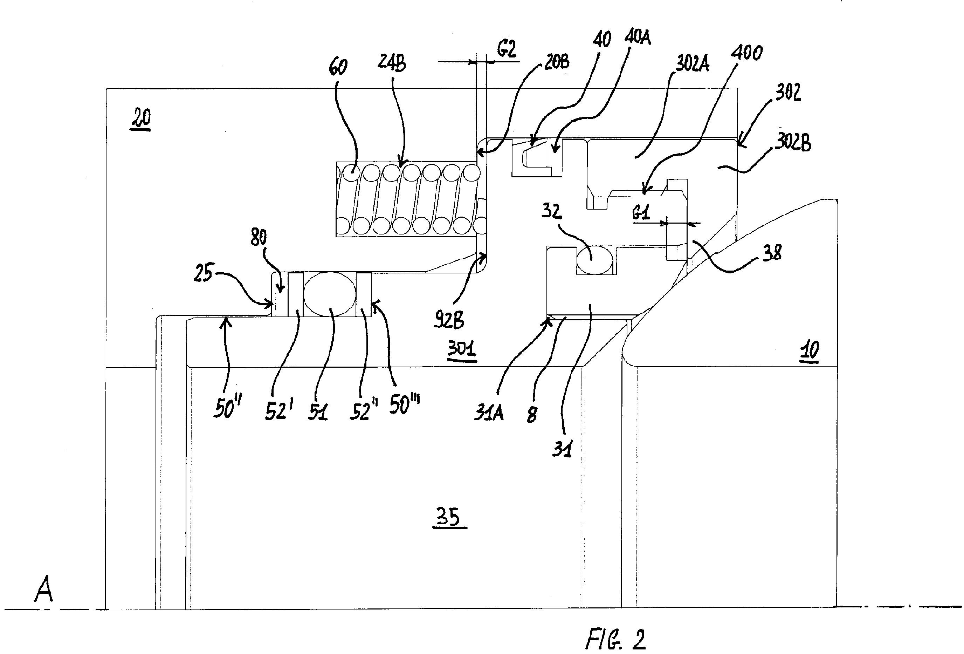

The sealing assembly 101 comprises a sealing element 31, made of thermoplastic material, and accommodated inside the first housing 31A (as shown in Figure 2) to achieve the sealing between the seat 30 and the ball 10. Such a sealing element 31 is thus ring-shaped to be inserted in the first housing 31 A. For this reason, in the description, the sealing element 31 is also indicated as *"ring 31*"*.*

The sealing element 31 is preferably made of PTFE (with various composites), PA, PEEK, POM, PCTFE and similar high-hardness thermoplastic polymers in order to achieve the fluid pressure sealing between seat 30 and ball 10.

According to the present invention, the sealing element 31 is housed with radial clearance in the first housing 31A so as to float, with respect to the seat 30, in the first housing 31A itself. In particular, the word *"floating"* means the possibility conferred to the sealing element 31 to move in axial direction, i.e. parallel to the central axis A when the seat 30 is installed in the valve body 20 and when said seat 30 is internally crossed by pressurized fluid. The expression *"radial clearance"* means a condition in which the area of the cross section of the sealing element 31, evaluated with respect to a plane orthogonal to the central axis A, is smaller than the cross-section area of the first housing 31A, evaluated on the same plane.

With this regard, according to a possible, but not exclusive embodiment, the cross-section area of the first housing 31A is from 1% to 5% greater than the cross-section area of the sealing element 31. Preferably, but not exclusively, the cross-section area of said first housing 31A is from 1% to 3% greater than the cross-section area of the sealing element 31.

According to the present invention, the seat 30 also comprises a second part 302 (hereinafter also indicated with the expression *"anti-extrusion part 302"*) screwed either directly onto the first part 301 the seat 30. Such a second part 302 comprises at least one anti-extrusion portion 38 which faces the first housing 31A to prevent the extraction of the sealing element 31 from the first housing 31A itself. In particular, once the second portion 302 has been screwed onto the first portion 301, the anti-extrusion portion 38 establishes a travel stop position for the floating movement, in axial direction, of the sealing ring 31 in the first housing 31A defined above. In practice, the anti-extrusion portion 38 advantageously avoids the extraction of the sealing ring 31 from the first housing 31A during the step of opening of the valve.

Preferably, the second part 302 is made of the same metal material as the first part 301 of the seat 30. However, the two parts 301,302 could be made of a different material.

Again, according to a preferred embodiment shown in the Figures, the second part 302 can be screwed directly onto the first part 301. The word *"directly"* indicates a condition such that one between the first part 301 and the second part 302 comprises a *"male"* threaded portion which is screwed into a corresponding *"female"* threaded part of the other part. As a whole, the two parts 301,302 are connected by means of a threaded connection, generically indicated by reference numeral 400 in Figure 2.

In the embodiment shown in figures 2-5, for example, the second part 302 comprises an axial portion 302A, which develops prevalently in axial sense (parallel to the central axis A), and a radial portion 302B which develops instead prevalently in radial sense (orthogonal to the central axis A). As a whole, in front of the two portions 302A, 302B thus shaped, the second part 302 is substantially L-shaped, evaluated on a radial plane containing the central axis A. The axial portion 302A comprises an outermost surface 71 (having cylindrical development) and an innermost surface 72 (having cylindrical development). The latter configures a *"female treaded portion".* The first portion 302A is axially delimited by a first transversal surface 76, which develops between the two surfaces 71,72 of the second part 302 defined above.

The radial portion 302B of the anti-extrusion part 302 comprises a front transversal surface 81 and a rear transversal surface 82, which develops on transversal planes. The two surfaces 81,82 have an annular shape which identifies, for each one, an inner diameter D₈₁, D₈₂. In this case, given the proximity with the ball 10, the words *"front"* and *"rear"* indicate a vicinal and distal position of the rotation axis Y of the ball 10, respectively.

The two transversal surfaces 81 and 82 are joined by an inner surface 83 which faces the ball 10 when the seat 30 is installed in the valve body 20, as shown for example in Figure 3. More precisely, the two transversal surfaces 81,82 are defined so that the inner diameter of the rear surface 82 is smaller than the inner diameter of the front surface 81 (D₈₂<D₈₁) so that the inner surface 83 is inclined and divergent towards the ball 10.

The anti-extrusion portion 38 is delimited between the rear radial surface 82 and the inner surface 83, i.e. at the edge/vertex 85 identified between these two surfaces 82,83. As specified in greater detail below, an innermost annular region (indicated by C1 in Figure 3) of the rear transversal surface 82 which faces a region (indicated by B2) of the front surface of the sealing ring 31, substantially defining an abutment/stop surface of the sealing ring 31 itself in the first housing 31A, is identified near such an edge/vertex. Such an annular region C1 is substantially a region of the transversal surface 82 closest to the central axis A.

The first part 301 of the seat 30 comprises a front axial portion 91, the word *"front"* indicating a most vicinal position to the rotation axis Y of the ball 10, when the sealing assembly 101 is inserted in the valve body 20. The front axial portion 91 comprises a front surface defined by a first transversal part 900A substantially perpendicular to the central axis A and by a second part 900B inclined with respect to the central axis A itself to be complementary with the profile of the ball 10. The first housing 31A indicated above develops axially starting from said second part 900B.

The front axial portion 91 comprises an outermost surface 94 (having cylindrical development) which configures a *"male"* threaded portion into which the *threaded female portion* configured at the innermost surface 72 of the second part 302 of the seat 30 is screwed. More precisely, the second part 302 is screwed onto the first part 301 until the second rear transversal surface 82 comes into contact with the first part 900A of the front surface of the front axial portion 91 of the rear part 301. Substantially, the first part 900A constitutes an abutting surface for the screwing of the second part 302. It is worth noting that a front surface of the seat 30 partially defined by the surfaces (transversal front 81 and inner 83) of the radial portion 302B of the second part 302 and partially defined by the second part 900B of the main part 301 can be identified at the end of the connection between the two parts 301,302.

In an alternative configuration not shown in the figures, the main part 301 of the seat 30 could configure a female threaded portion, while the anti-extrusion part 302 could configure a male threaded portion. This variant must also be considered as belonging to the scope of the present invention.

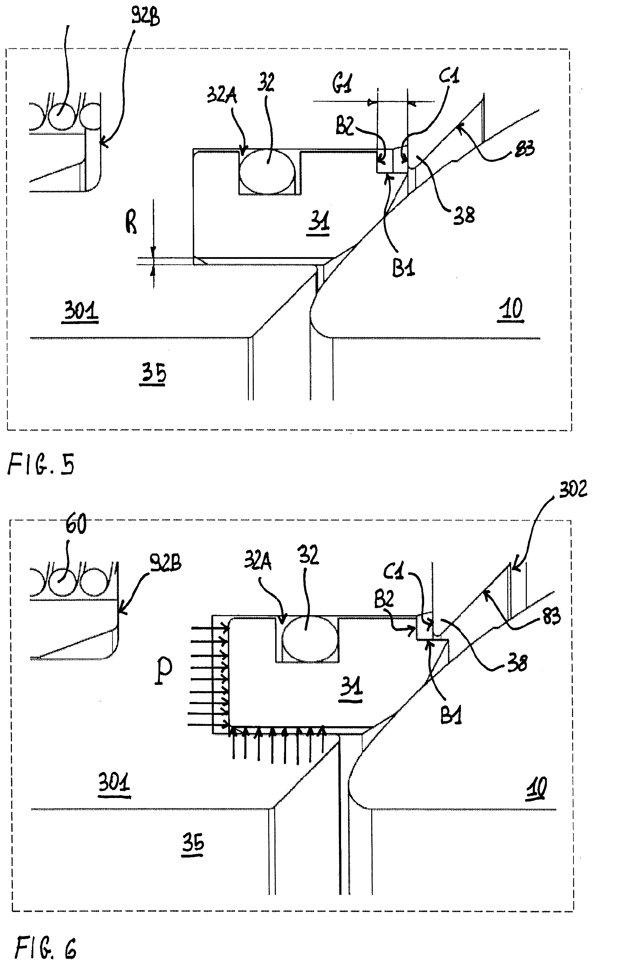

The principle, by means of which the sealing is obtained by the ring 31, is described with reference to figures 5 and 6. In Figure 5, the ring 31 is inserted in the first housing 31A defined in the first part 301 of the seat 30. In particular, according to the present invention, the ring 31 is inserted in the housing 31A with radial clearance, indicated by reference R. In this condition, the axial cavity 35 defined by the seat 30 (in particular by the first part 301) is not crossed by the pressurized fluid. In figure 5, the radial clearance R is enlarged for illustration reasons only.

In the condition in Figure 6, the seat 30 is internally crossed by the pressurized fluid. The seat 30 is pushed towards the ball 10 by effect of the elastic means 60 (indicated in Figure 2) and by the pressure which acts on the rear surfaces 92B,50" of the seat 30, according to principles which will described below in greater detail. At the same time, the pressurized fluid moves up the gap existing between the ball 10 and the inclined part 900B of the front surface of the first part 301 and insinuates into the first housing 31A by effect of the radial clearance R. By virtue of the closed bottom surface 310 of the first housing 31A, the sealing element 31 is pushed by the pressure P of the fluid towards the ball 10 thus achieving the fluid sealing.

It is worth noting that the thermoplastic ring 31 is pushed against the ball 10 directly by the pressure P of the fluid with no need for any external energizing system. In this sense, the ring 31 may be considered *"self-floating"* in axial direction. Furthermore, it is worth noting that the sealing advantageously increases as the fluid pressure increases because the thrust applied by the pressure on the ring 31 increases. At the same time, although the ring 31 is stiffer than an elastomeric element, by virtue of the action of the pressure force which pushes the ring 31 towards the ball 10, the sealing is optimized also at the low pressures, with all the advantages in terms of resistance to wear deriving from the hardness of the thermoplastic material.

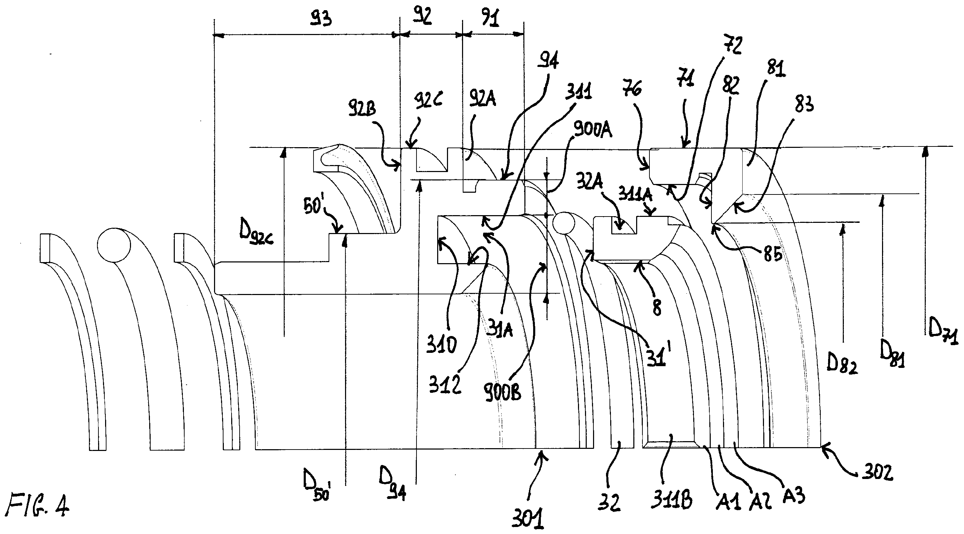

Figure 4 allows to observe the shape of the elements which form the sealing assembly 101 according to the invention, shown in Figure 2 and 3 respectively with or without the valve body 20, in detail. In particular, Figure 4 is an exploded view which allows to observe a section of all the components of the sealing assembly 101. In said Figure 4, it is apparent that all the components of the sealing assembly 101 develop as revolution solids about the central axis A.

The first housing 31A is defined by an outermost cylinder surface 311 and by an innermost cylindrical surface 312 coaxial about the central axis A. Such cylindrical surfaces 311,312 respectively face an outermost surface 311A and an innermost surface 311B of said sealing element 31. In closed valve conditions, the outermost cylindrical surface 311A of the sealing element 31 abuts against/is in contact with the innermost surface 311 of the first housing 31A by effect of the fluid pressure. Preferably, the first housing 31A develops prevalently along the axial direction, i.e. parallel to the central axis A. This means that the extension of the first housing 31A, measured along the axial direction, is greater than the distance, measured along a direction orthogonal to the central axis A, between the outermost cylindrical surface 311 and the innermost cylindrical surface 312 defining the housing itself.

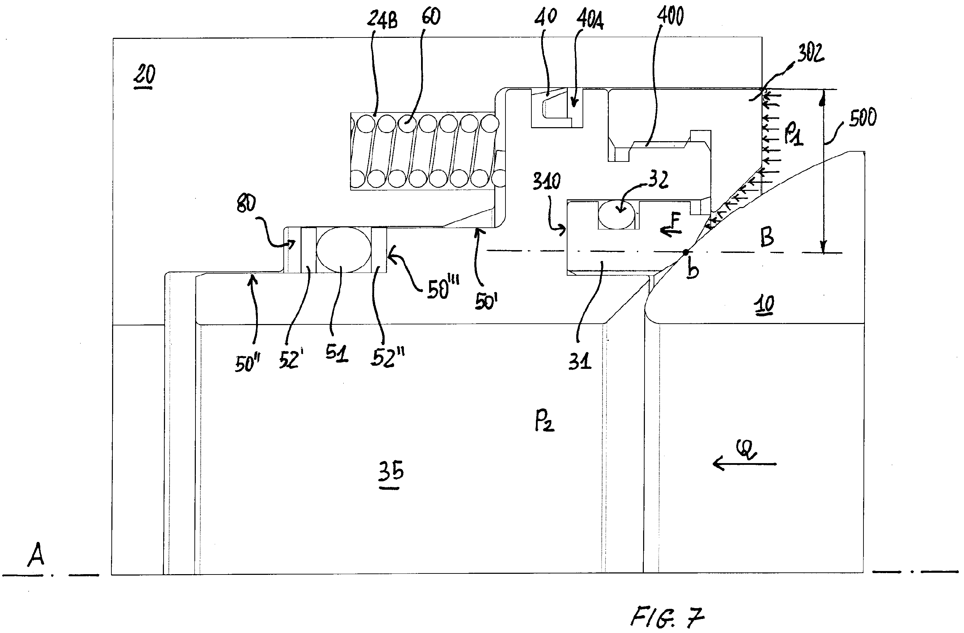

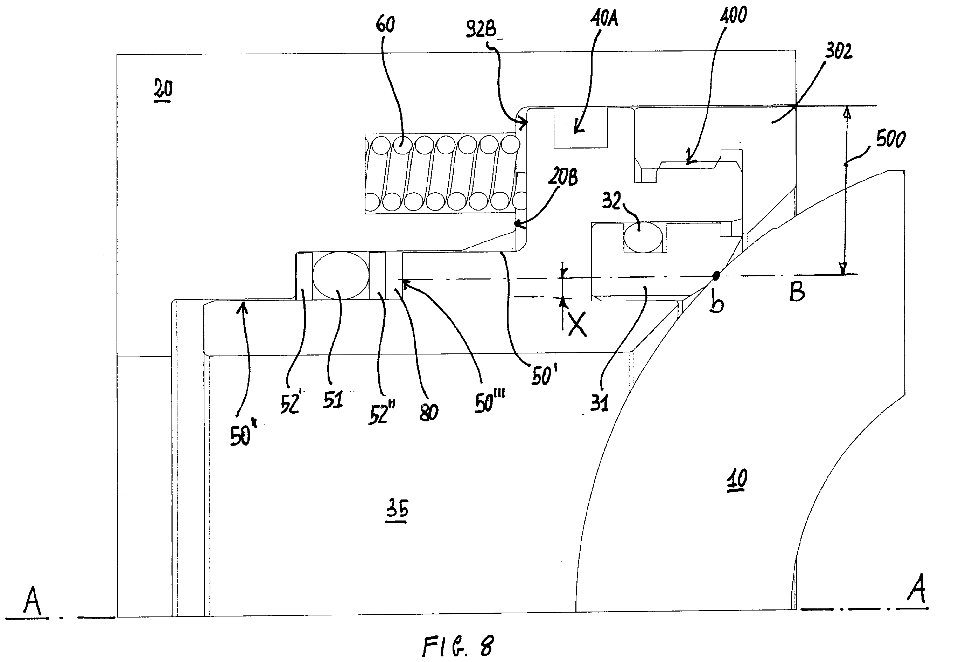

According to the invention, the sealing element 31 defines a circular housing 32A at the outermost surface 311A in which an inner sealing ring 32 is accommodated. Substantially, the latter configures a supplementary sealing about the sealing element 31 and more precisely between the outermost cylindrical surface 311A of the sealing element 31 and the outermost cylindrical surface 311 of the first housing 31A. Substantially, the inner ring 32 prevents the pressure P from getting around the sealing element 31 being released from the first housing 31A over the position (indicated by point b in figures 7 and 8) in which the sealing element 31 comes into contact with the ball 10.

The circular housing 32A can be defined by a groove which develops in the sealing element 31, in intermediate position between the front surface and the rear surface of the sealing element 31 (such surfaces are defined below) as shown, for example, in the embodiment in Figures 2-4. Alternatively, the circular housing 32A may be defined by a shoulder obtained at the rear surface 31' of the sealing element 31, as shown in the embodiments in the Figures from 10 to 11, discussed below.

According to a possible embodiment, the inner ring 32 is defined by an O-ring, preferably made of elastomeric material. Alternatively, a U-shape ring seal or a lip-seal (simple or double) type seal may be inserted in the circular housing 32A according to solutions described in greater detail below commenting figures from 13 to 14.

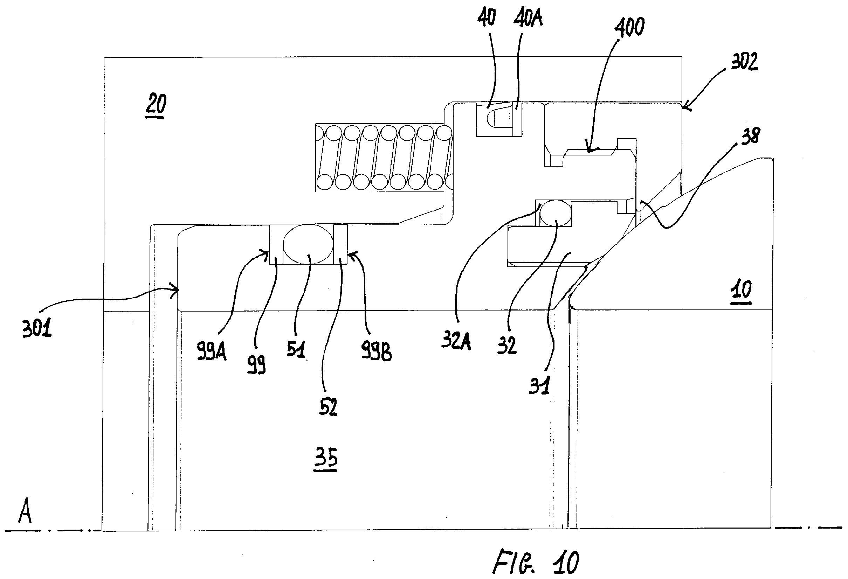

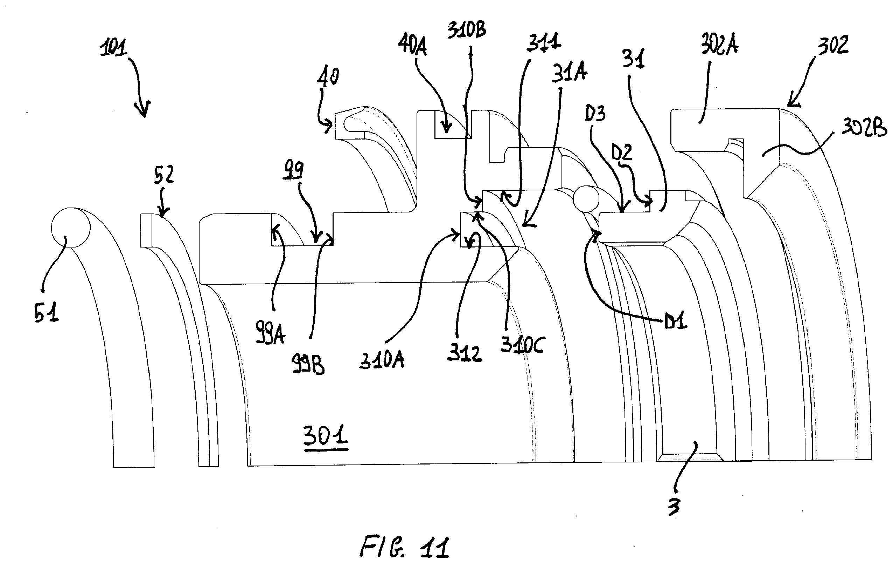

With reference again to the exploded view in figure 4, the sealing element 31 comprises a front surface which faces towards said ball 10 when said seat 30 is installed in said valve body 20 and a rear surface 31' which faces the closed bottom surface 310 of said first housing 31A. Preferably, the rear surface 31' develops on a transversal plane, i.e. orthogonally to the cylindrical surfaces 311A,311B of the ring 31. According to a first possible embodiment shown in figures from 2 to 4, the rear surface 31' develops on a single transversal plane. In the variant embodiment in figures 10 and 11 described below, the rear surface 31' has two portions which develop on spaced apart transversal planes.

The front surface of the sealing ring 31 (i.e. the surface which in use faces the ball 10) comprises a first portion 133A, inclined with respect to said central axis A to come into contact with the ball 10 and achieve the sealing in the presence of pressurized fluid in the seat 30. In a preferred variant shown in the figures, the front surface 133A has a first region A1, a second region A2 and a third region A3, wherein the second region A2 is between the other two regions A1, A3. The three regions A1, A2, A3 have a different inclination with respect to the central axis A. In other words, the three surface regions A1, A2, A3 develop on planes differently inclined with respect to the central axis A. The first region A1 develops from the innermost cylindrical surface 312A of the sealing element 31 and has a lower inclination than that of the second region A2. The latter has in turn a smaller inclination than that of the third region A3 (inclination always evaluated with respect to the central axis A). When the sealing ring 31 is pushed against the ball 10, fluid sealing is achieved mainly by the second region A2.

The first portion 133A of the front surface of the ring 31 could take a different shape from the *"three-region"* shape described above. In a first possible embodiment, for example, the first portion 133A could be defined by a sole inclined surface with respect to the central axis A. According to a second possible variant, the first portion 133A could be defined by a curved surface, i.e. a convex shape in direction of the ball 10.

According to the invention, the front surface of the ring 31 also comprises a second portion, adjacent to the first portion 133A. The anti-extrusion portion 38 of the second part 302 of the seat 30 intervenes on such a second portion. More precisely, the intervention of such an anti-extrusion portion 38 is achieved following the axial displacement (floating) of the sealing element 31 due to the pressure force P which acts on the rear surface 31' of the sealing ring 31. During the step of opening of the valve, the pressure inside the passage gap 12 of the ball 10 is lower than the pressure in the cavity 35 of the seat 30. This condition would thus tend to extrude the ring 31 from the housing 31A. This extrusion is precisely prevented by the anti-extrusion portion 38.

In a (not exclusive) preferred embodiment shown in the figures, the second portion of the front surface of the ring 31 is substantially *"step-like"* defined by two surface regions indicated by B1 and B2 shown in Figure 4. The surface region B1 is preferably cylindrical and coaxial with the other cylindrical surfaces 311A,311B of the sealing ring 31. The surface region B1 develops starting from the first portion 133A of the front surface of the sealing ring 31 towards the rear surface 31' of the ring 31. The surface region B2 develops on a transversal plane between the surface B1 and the outermost cylindrical surface 311A.

As shown in figures 3, 5 and 6, following the connection between the two parts 301,302 of the seat, the annular region C1 of the rear transversal surface 82 of the second portion 302B remains facing the surface region B2, in particular the annular region C1 emerges in a position facing and spaced apart from the surface region B2 of the sealing element 31. The word *"spaced apart"* indicates a condition, evaluated in the absence of pressurized fluid, such that there is a gap (indicated by G1 in Figure 2) between the annular portion C1 and the surface region B2, which gap allows, in the presence of the pressurized fluid, the axial (floating) movement of the sealing element 31 towards the ball 10. Such an axial movement stops when the surface region B2 comes into contact with the annular portion C1 of the rear transversal surface 82 of the second portion 302A of the anti-extrusion part 302.

According to a preferred embodiment, grooves 8 are defined at the innermost surface 311B of the sealing ring 31, which grooves develop in axial direction starting from the first portion 311A of the front surface 133A to the rear surface 31' of the element itself. Such grooves 8 develop instead radially in direction of the outermost surface 311A of the sealing element 31. The grooves 8 are defined at preferably equal angular intervals about the central axis A. Specifically, the grooves 8 have the purpose of promoting the penetration of the fluid between the innermost cylindrical surface 312 of the housing 31A and the innermost surface 311B of the sealing ring 31 up to the bottom wall 310 which axially delimits the first housing 31A. Thereby, the thrust on the rear surface 31' of the sealing ring 31 is ensured.

According to another aspect, the first part 301 of the seat 30 preferably comprises an intermediate axial portion 92, adjacent to the front axial portion 91 and a rear axial portion 93, which develops in direction opposite to the front portion 91 with respect to the intermediate portion 92 (see Figure 4). Each of said axial portions 91,92,93 comprises an outermost surface 94,92C,50'. The diameter D_{92C} of the intermediate axial portion 92 is greater than the diameters D₉₄, D_{50'} of the other two axial portions 91,93 of the main part 301.

The intermediate axial portion 92 is limited in axial sense between a front surface 92A and a front surface 92B which develops on transversal planes. The intermediate axial portion 92 is limited in radial sense by an outer cylindrical surface 92C which develops between the two radial surfaces 92A,92B. Preferably, diameter D_{92C} of the outer cylindrical surface 92C coincides with diameter D₇₁ of the outer cylindrical portion 71 of the second portion 302. In an alternative embodiment, the two diameters D_{92C} and D₇₁ could be different.

According to a further embodiment, elastic means 60 act on the rear surface 92B of the intermediate axial portion 92 operatively interposed between the valve body 20 and the first portion 301 of the seat 30. In the embodiment illustrated in the figures, the valve body 20 defines one or more rear housings 24B each containing elastic means 60, e.g. consisting of a helical spring. In particular, such elastic means 60 act on the first part 301 of the seat 30 so as to push the entire seat 30 towards the ball 10, defining a gap, hereinafter indicated as *gap G2* (see Figure 2), between the rear surface 92B of the intermediate axial portion 92 and the surface 20B of the valve body 20, facing the rear surface 92B itself. In particular, the *gap G2* is established so as to be smaller than the *gap G1* defined between the annular region C1 (of the rear transversal surface of the second part 302) of the anti-extrusion portion 38 and the radial region surface B2 of the front surface 133 of the sealing element 31 defined above.

Advantageously, the condition G1>G2 allows the recovery of the elastic deformation to which the ball 10 is subjected in the presence of pressure. In other words, by means of this condition, the ring 31 is provided with the axial travel sufficient to ensure the sealing against the ball 10 also in the presence of elastic deformation thereon.

In an alternative embodiment, if the size of the seat 30 and of its parts 301,302 so allow, the elastic means which push the seat 30 towards the ball 10 could be housed in appropriate housings defined in the second portion 92 of the first part 301 of the seat.

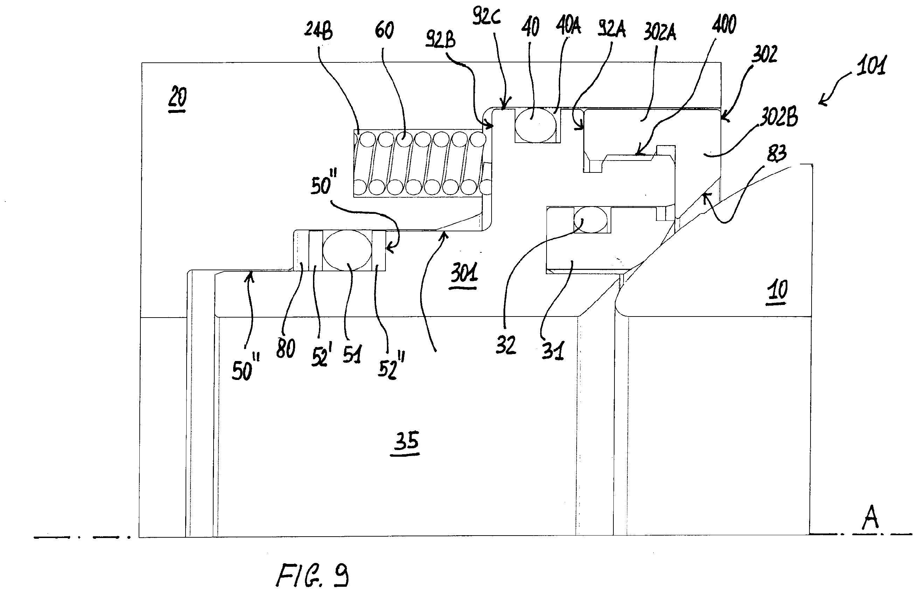

According to a further aspect, the intermediate axial portion 92 of the seat 30 preferably comprises a recess 40A which develops from the outer surface 92C and in which a further outer sealing ring 40 can be accommodated, e.g. an O-ring (as shown in Figure 9) made of elastomeric material or alternatively in form of lip seal (as shown for example in figures 2-4) also made of elastomeric material. As shown in greater detail below, in a first possible embodiment, the sealing assembly 101 comprises an outer ring 40 accommodated in the recess 40A to configure a SPE type valve. In an alternative embodiment, shown in Figure 8, the sealing assembly 101 does not comprise said outer ring 40 so to configure a DPE type valve.

According to a further aspect, the rear axial portion 93 of the first part 301 of the seat 30 extends from the rear surface 92B of the intermediate portion 92 in direction opposite to the first portion 91. The rear axial portion 93 comprises a cylindrical outermost surface 50', which develops from said rear surface 92B, coaxially to the central axis A.

In a first possible embodiment, shown in the Figures from 2 to 4, the rear portion 93 of the first part 301 further comprises a cylindrical innermost surface 50", which develops parallel to the central axis A having a smaller radial extension than that of the first outer surface 50'. The two surfaces 50',50" of the rear portion 93 are connected by a shoulder surface 50"', which develops on a transversal plane. When the seat 30 is installed in the valve body 20, the second surface 50" and the shoulder surface 50'" configure, with the valve body 20, a rear housing 80, in which rear ring-shaped sealing means 51,52',52" are accommodated. In particular, such a rear housing 80 is delimited on front by the shoulder surface 50'" and behind by a surface 25 of the valve body 20 facing the shoulder surface 50'" itself.

The rear sealing means (51,52',52") ensure the rear sealing between the seat 30 and the valve body 20. In a possible embodiment, the rear sealing means comprise a first ring-shaped seal 51, a first anti-extrusion seal 52' and a second anti-extrusion seal 52" arranged on opposite sides with respect to the first ring seal 51 to prevent its release from the rear housing 80. The rear sealing means may further comprise a ring-shaped graphite seal (not shown) accommodated in the rear housing 80 between the first anti-extrusion rear seal 52' and the shoulder surface 50"'. Such a graphite seal 53 is adapted to perform the fire save function. As mentioned above, the sealing assembly 101 for ball valves according to the present invention is advantageously interchangeable, i.e. capable of performing the sealing function in Double Piston Effect (DPE) valves or to perform the *"self-relieving"* function in Single Piston Effect (SPE) valves, respectively, and simply by eliminating the outer sealing ring 40 in the recess 40A or providing its presence. With this regard, the solution shown in Figure 7, the sealing assembly 101,102 comprises the outer sealing ring 40 in the recess 40A of the intermediate portion 92 of the first part 31 of the seat 30. Such an outer ring 40 ensures the *"self-relieving"* operation in Single Piston Effect (SPE) in case of lack of sealing of the first sealing assembly of the valve which works upstream of the ball 10 with respect to the flow of working fluid.

With reference to Figure 7, b indicates the sealing point of the sealing element 31, while B indicates a reference axis passing through a sealing point b and parallel to the central axis A. Again, in figure 7, it is thus possible to identify a part (indicated by reference numeral 500) of the front surface 30A of the seat 30 over the axis B, which may be concerned by the pressure P1 of the fluid, e.g. in case of lack of sealing of the system upstream of the ball 10. In figure 7, the valve is drawn in the configuration which it assumes immediately before it is closed, i.e. immediately before the *"self-relieving"* condition occurs. Figure 7 indicates the direction of the flow Q.

In closed valve condition, the sealing element 31 achieves the sealing of the ball 10 by effect of the pressure P2 (P2<P1) downstream of the ball. Therefore, the fluid does not pass beyond point b, thus striking the surface of the seat 30 over axis B. In the presence of the outer ring 40 in the recess 40A, the fluid does not pass beyond the outer ring 40 itself and the seat 30 behaves as a *"self-relieving",* i.e. automatically opening, seat. Indeed, when the fluid pressure P1 overcomes the resistance force of the elastic means 60, the seat 30 moves away from the ball 10 and the pressure is relieved downstream of the ball. By effect of the axial movement of the seat, immediately after the closing of the valve, the rear surface 92B of the intermediate axial portion 92 is in contact with the surface 20B of the valve body. It is worth noting that by effect of the pressure P1 the sealing element 31 is also pushed in the axial direction indicated by the arrow F.

On the contrary, in the condition shown in Figure 8, i.e. in the absence of the outer ring 40 in the recess 40A, the fluid goes beyond the recess itself and insinuates between the rear surface 92B of the seat 30 and the valve body 20 in the region in which the elastic means 60 are arranged. The fluid continues until meeting the rear sealing means (51,52',52"), and more specifically the rear ring seal 51, which achieves the rear sealing between the seat 30 and the valve body 20. The fluid further advances into the rear housing 80, and pushes the rear ring seal 51 from behind, which thus achieves the rear sealing. At the same time, the fluid exerts a pressure on the shoulder surface 50"', which frontally closes the housing 80 in which the rear sealing means are arranged. The pressure on the shoulder surface 50'" translates into a corresponding thrust on the seat 30 towards the ball 10.

As a whole, the pressure force which acts against the seat 30, by pushing it away from the ball 10, is given by the pressure which acts on the frontal part 30A of the seat 30 over the axis B (front thrust surface 500). On the other hand, on the seat 30 a counter-pressure is exerted which pushes it against the ball 10. Such counter-pressure is determined by the pressure of the rear surface 30B and on the shoulder surface 50"'. The overall rear thrust surface of the seat 30 on which said "counter-pressure" acts (sum of the surfaces 92B and 50'") is greater than the part 500 of the surface of the seat 30 over axis B on which the pressure tending to move the seat 30 away from the ball 10 acts. The difference is shown by the surface region 50'" indicated, in figures 2 and 3 by reference X, under axis B.

Such a difference thus determines an imbalance of forces following which the seat 30, and in particular the sealing element 31, is kept against the ball 10. Therefore, the pressurized fluid deriving from a lack of sealing of the system upstream of the ball 10 is retained on the front by the sealing element 31 and behind by the rear sealing elements 51,52',52", thus without releasing downstream from the ball 10. So, in this case, the valve 1 assumes the *"Double Piston Effect"*)DPE) behavior.

In particular, it has been seen that the sealing assembly according to the present invention, and in particular the respective seat 30, is interchangeable because it can perform the *"Single Piston Effect"*)SPE) or *"Double Piston Effect"*)DPE) function simply by either providing or eliminating a seal, the outer ring 40 in the recess 40A, keeping all other shape and size features and sealing elements unchanged.

The sealing assembly according to the invention thus allows the valve manufacturer to make a single type of valve (with valve body configured so as to accommodate the seat 30 of the sealing assembly 1, as described above, and illustrated in the accommodating figures), it being possible to advantageously provide the same valve for different types of use, simply by including, at the moment of assembly, the insertion of a sealing assembly according to the present invention with the corresponding configuration, i.e. with the presence of the outer ring 40 in the recess 40A or not. Thereby, the valve manufacturer is no longer forced to manufacture and have different valve types on stock for use in different seats, and at the same time may have a lower number of seats on stock, because the same seat may be used to make SPE valves or to make DPE valves.

Figures 10 and 11 related to a SPE type valve in which the sealing assembly according to the invention differs from that in figures from 2 to 7 mainly only for a different configuration of the sealing element 31 and of the housing 31A which houses it. In this embodiment, the rear surface of the sealing ring 31 comprises two portions D1, D2 which develop on mutually spaced apart and parallel transversal planes. The rear surface also comprises an intermediate cylindrical surface D3 which develops between the two parallel portions D1, D2. As a whole, in this embodiment, the portions D1, D2, D3 of the rear surface configure a shoulder, i.e. a housing 32A for the inner sealing ring 32. In the embodiment shown in figures 10 to 11, the sealing ring 32 assumes the shape of an O-ring made of elastomeric material.

The bottom surface 310 of the first housing 31A is defined by two transversal portions 310A and 310B which develop on mutually spaced apart transversal planes. In particular, one of the two transversal portions 310A, 310B is in an innermost position with respect to the other of the two transversal portions 310A, 310B, wherein said position is evaluated with respect to the front surface of the front part 301 of the seat 30. The two transversal portions 310A, 310B are joined by an intermediate cylindrical surface 310C which faces the innermost cylindrical surface 312 of the housings itself. When the sealing ring 31 is inserted in the housing 31A, the intermediate cylindrical surface 310C is adjacent to/in contact with the intermediate cylindrical surface D3 of the sealing ring 31 itself.

The sealing system shown in Figures 10 and 11 differs from that shown in figures 2-7 also for a different conformation of the rear portion 93 of the main part 301 of the seat 30. More precisely, said rear portion 93 comprises a recess 99 which develops radially towards the central axis A remaining in front and behind delimited by transversal surfaces 99A, 99B defined by the rear portion 93 itself. In other words, the recess 99 is a closed recess internally defined by the rear portion 93. Rear sealing means, particularly an O-Ring 51 and an anti-extrusion ring 52, are present in the recess 99. Alternatively, sealing means 51,52,52" corresponding to that already described above to comment figures 2-8 may be inserted in the recess 99.

With reference again to the solution in figures 10 and 11, it is worth noting that the sealing ring 31 and the first housing 31A described above are entirely independent from the shape of the rear portion 93 of the main part 301 of the housing 30. In other words, the conformation provided for the components 31 and 31A, for example, may be provided in combination with the conformation of the rear portion 93 provided in the solution shown in Figures 2-8.

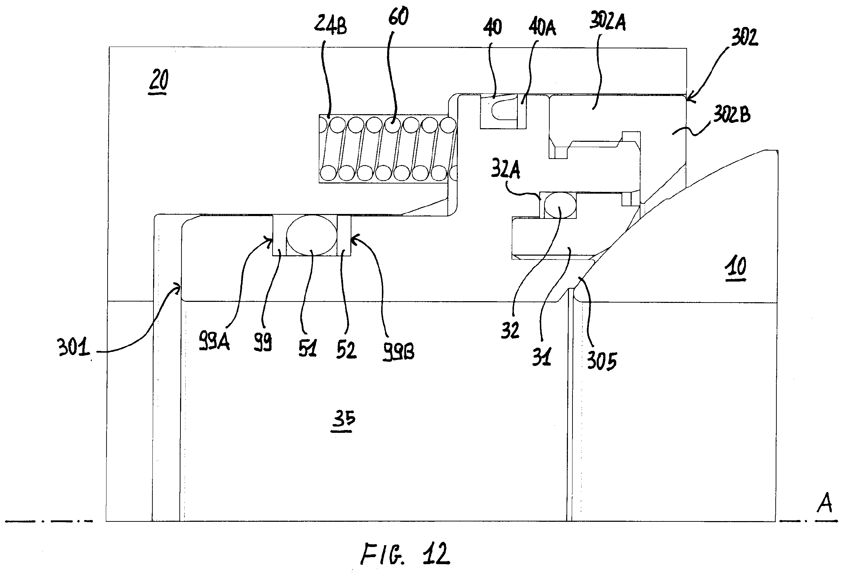

According to another aspect, shown in Figure 12, the front surface of the main part 301 of the seat could be configured so as to make a sealing known in the field with the acronym PMSS *(Primary Metal Secondary Soft).* In particular, said front surface could comprise an innermost part 305 of the inclined part 300B which comes into contact in a permanent manner with the surface of the ball 10 when the seat 30 is installed in the valve body 20. The contact between the innermost part 305 and the surface of the ball 10 constitutes a first metal-metal sealing for the pressurized fluid. A second barrier is instead defined by the contact between the thermoplastic sealing ring 31 and the surface of the ball 10 according to the principles already illustrated above.

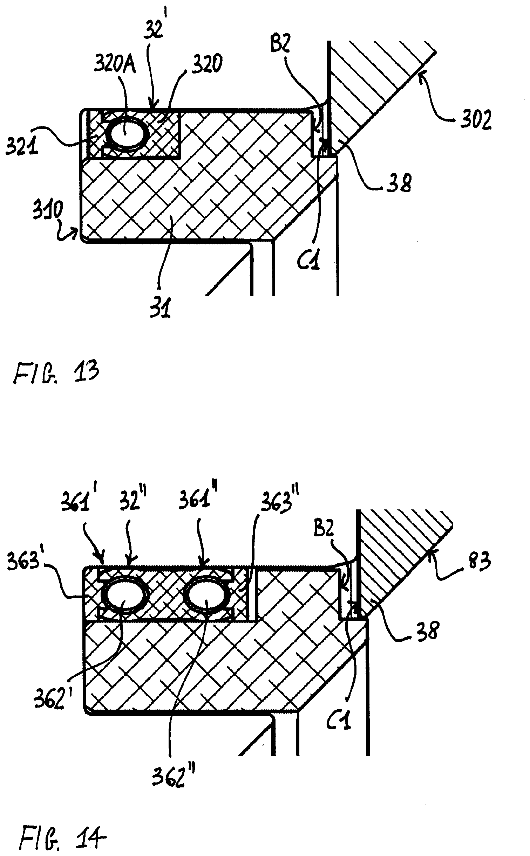

Figures 13 and 14 schematically show further embodiments of the ring 31 and in particular of the inner ring (indicated by reference numeral 32') inserted in the recess 32A defined by the sealing element 31. In particular, in these figures, the conformation of the front surface of the ring 31 is slightly different from that shown in Figures 10 and 11, while the conformation of the first housing 31A corresponds to that described in Figures from 2 to 8.

In the solution in Figure 13, the inner ring 32' is of the lip-seal type made of thermoplastic material. This expression indicates a seal formed by a ring-shaped body 320 the section of which (evaluated according to a cross section plane cross) is U-shaped. The ring 320 is inserted in the housing 32A so that the two opposite parts of the U are arranged parallel to the central axis A. A spring 320A also ring-shaped is arranged in the ring 320. Such a ring 320A has the purpose of energizing the ring-shaped element so as to ensure the contact of the opposite parts of the U against the corresponding cylindrical surfaces of the recess 32A also in case of relatively contained pressure. The lip-seal type ring 32' further comprises a containing element 321 (back pressure) which is inserted in the ring 320 (on the opened side of the U) in order to contain the spring 320A. When the seat 30 is crossed by the pressurized fluid, the surface of the containing element 321 facing towards the rear surface 310 of the recess 31A undergoes a thrust deriving from the fluid pressure itself. Such a thrust is transmitted to the sealing element 31 to achieve the floating movement in the recess 31A according to the principles expressed above.

In the solution in Figure 14, the inner ring (indicated by reference numeral 32") is of the *"double lip-seal"* type. Substantially, this sealing ring 32" may be seen as the whole of two opposite lip-seal rings. In particular, the sealing ring 32" comprises a ring 361 made of thermoplastic material which defines two opposite U-shaped parts 361',361", in each of which a ring-shaped spring 362',362" is inserted. For each part 361',361" a containing element 363',363" is included for containing the corresponding ring-shaped spring 362',362".

Figures from 15 to 17 diagrammatically show further embodiments of the rear sealing means associated with the rear portion 93 of the main part 301 of the seat 30. Also in this case, each of the embodiments shown for the sealing means may be provided in combination with any one of the technical solutions described above for the sealing ring 31, and/or for the first housing 31A and/or for the inner sealing ring 32,32',32" described above.

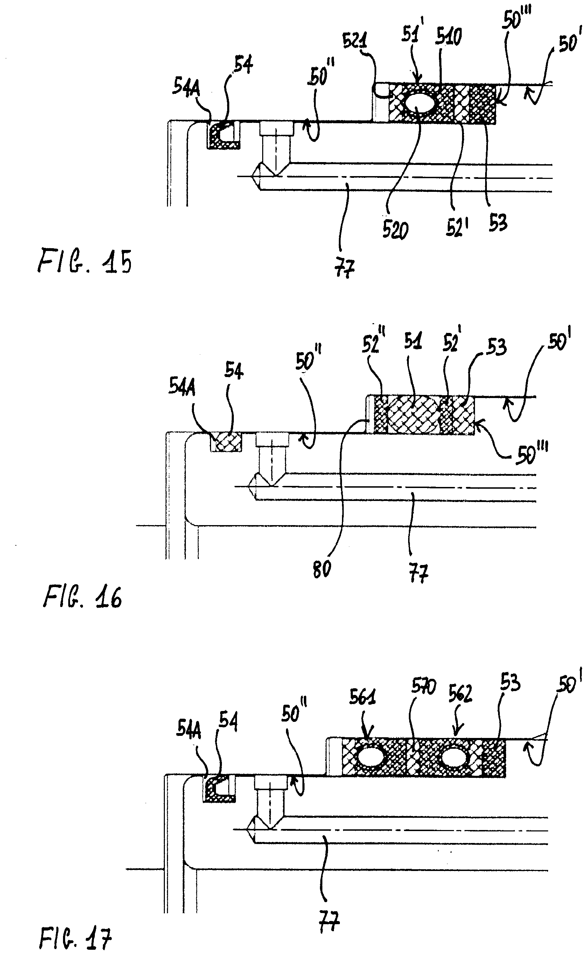

In the embodiment shown in Figure 15, the sealing means comprise a rear sealing ring (indicated by reference numeral 51') of the *lip-seal* type the conformation of which is similar to that described for the inner ring 32' in Figure 13. In particular, the rear sealing ring 51' has a ring-shaped body 510, an inner spring 520 and a containing element 521. In the solution of Figure 15, the sealing means comprise a graphite ring 53 and an anti-extrusion ring 52' between the graphite ring 53 and the rear ring 51'. In particular, the graphite ring 53 faces the shoulder surface 50'" of the seat 30.

In the embodiment shown in Figure 16, the sealing means comprise a sealing ring 51 and two anti-extrusion rings 52',52" arranged on opposite sides of the sealing ring 51 in a manner corresponding to that described in the embodiment shown in Figures from 2 to 8. However, in this case, the sealing means further comprise a graphite ring 53 facing the shoulder surface 50"'.

In the embodiment shown in Figure 17, the rear sealing means comprise two "lip-seal" type seals (indicated by reference numerals 561, 562) between which an anti-extrusion ring seal (indicated by reference numeral 570) is provided. The two lip-seal type seals are arranged so as to be specular with respect to the anti-extrusion ring 570. Preferably, a graphite sealing ring 53 is also provided in this case.

With reference to the embodiments shown in the Figures from 10 to 13, the use of the lip-seal or double lip-seal rings made of thermoplastic material allow applications at temperatures which could be instead prohibitive for an elastomeric material (e.g. rubber). At the same time, the chemical inertia of the thermoplastic material allows applications which cannot be achieved with rubber or other elastomeric materials.

According to a further aspect, shown precisely in Figures from 15 to 17, the rear axial portion 93 of the first part 301 of the seat 30 may comprise a further recess 54A, which may develop from the second cylindrical surface 50" to accommodate a further sealing ring 54, preferably an elastomeric O-ring (Figure 16) or an elastomeric lip seal (Figures 15 or 17), provided as grease seal in the presence of lubrication. For this purpose, a channel 77 for feeding grease may be provided inside the first part 301 of the seat 30. Such a channel 77 is developed between said second surface 50" of the rear portion 93' and the second portion 300B of the front surface 91 of the main part 301 of the seat 30. Such a channel 77 is defined by two communicating holes, one of which is defined in axial sense and the other in radial sense, according to a solution known per se in the field.

As mentioned above, the shapes and combinations of the sealing elements applied to the front axial portion 91, to the intermediate axial portion 92 and to the rear axial portion 93 of the first part 301 of the seat 30 could be different from those described above and shown in the figures. In all cases, it is worth observing that such combinations are always possible without any variation of the structure of the seat 30, which defines the housings for the various elements. This in accordance with the interchangeability of the sealing assembly according to the present invention.

## Claims

1. A sealing assembly (101,102) for an industrial ball valve (1) having at least one valve body (20) and a ball (10) housed inside said valve body (20), said sealing assembly comprising:
- at least one seat (30) which can be inserted in said valve body (20), said seat (30) developing about a central axis (A) and defining an axial cavity (35) for the passage of a pressurized fluid, said seat (30) comprising a first part (301) which defines a first housing (31A) at a front surface which faces towards said ball (10) when said seat (30) is installed in said valve body (20), said first housing (31A) comprising a closed bottom surface (310) which develops on a plane transversal to said central axis (A);
- a sealing element (31), made of thermoplastic material, to achieve the fluid sealing between said seat (30) and said ball (10) of said valve (1), said sealing element (31) being ring-shaped and accommodated with radial clearance (R) within said first housing (31A);
**characterized in that** said sealing element (31) floats with respect to said seat (30), along the direction parallel to said central axis (A) when said seat (30) is installed in said valve body (20) and when said seat (30) is internally crossed by said pressurized fluid,
wherein said first housing (31A) is defined by a first outermost cylindrical surface (311) and by an innermost cylindrical surface (312) towards which an outermost surface (311A) and an innermost surface (311B) of said sealing element (31) respectively face, and wherein said sealing element (31) defines a circular housing (32A) in which a sealing ring (32) is accommodated to achieve the sealing between said outermost surface (311) of said first housing (31A) and said outermost surface (311A) of said sealing element (31),
said seat (30) comprising a second part (302) directly screwed to said first part (301), wherein one between said first part (301) or said second part (302) comprises a male threaded portion which is screwed directly into a female threaded portion of the other of said parts (301,302) of said seat (30), and wherein said second part (302) comprises at least one anti-extrusion portion (38) which prevents the extraction of said sealing element (31) from said first housing (31A), at least during the step of opening of said valve (1).

2. A sealing assembly (101,102) according to claim 1, wherein said second part (302) of said seat (30) comprises an axial portion (302A), which includes an outermost cylindrical surface (71) and an innermost cylindrical surface (72), which configures said female threaded portion, said first part (301) of said seat (30) comprising an outermost cylindrical surface (94) which configures said threaded male portion.

3. A sealing assembly (101,102) according to claim 2, wherein said second part (302) of said seat (30) comprises a radial portion (302B) defined between a front transversal surface (81) and a rear transversal surface (82) joined by an inner surface (83), wherein said transversal surfaces (81,82) have an annular shape which identifies a respective inner diameter (D₈₁, D₈₂), said transversal surfaces (81,82) being defined so that the inner diameter (D₈₂), of said rear surface (82), is smaller than the inner diameter (D₈₁), of said front surface (81).

4. A sealing assembly (101,102) according to claim 3, wherein said anti-extrusion portion (38) is defined near an edge (85) identified between said rear transversal surface (82) and said inner surface (83) of said radial portion (302B) of said second part (302).

5. A sealing assembly (101,102) according to any one of the preceding claims 1 to 4, wherein said sealing element (31) comprises a rear surface (31') which faces said bottom surface (310) of said first housing (31A), and a front surface (133A, B1,B2) which faces said ball (10) when said seat (30) is installed in said valve body (20), said front surface comprising a first portion (133A) inclined with respect to said central axis (A) to come into contact with said ball (10), and a second portion (B1,B2) adjacent to said first portion (133A), and wherein said anti-extrusion portion (38) emerges in position facing and spaced apart from a surface region (B2) of said second portion of said front surface of said sealing element (31).

6. A sealing assembly (101,102) according to claim 5, wherein said innermost surface (311B) of said sealing element (31) comprises grooves (8) which develop in axial direction between said front surface and said rear surface of said sealing element (31) and in radial direction towards said outermost surface (311A) of said sealing element (31).

7. A sealing assembly (101,102) according to any one of the preceding claims 1 to 6, wherein the cross-section area of said first housing (31A) is from 1% to 5% greater than the cross-section area of said sealing element (31) and wherein said cross sections are evaluated on a radial plane substantially orthogonal to said axial direction (A).

8. A sealing assembly (101,102) according to any one of the preceding claims 1 to 7, wherein the cross-section area of said first housing (31A) is from 1% to 3% greater than the cross-section area of said sealing element (31) and wherein said cross sections are evaluated on a radial plane substantially orthogonal to said axial direction (A).

9. A sealing assembly (101,102) according to any one of the preceding claims 1 to 8, wherein said sealing element (31) is made of a material chosen from a group consisting of PEEK, PA, PTFE, POM, PCTFE.

10. A sealing assembly (101,102) according to any one of the preceding claims 1 to 9, wherein said sealing ring (32) is inserted in said circular recess (32A) defined by said sealing element chosen from a group consisting of an O-ring type ring made of elastomeric material, a lip-seal type ring made of thermoplastic material and of a double lip-seal type ring made of thermoplastic material.

11. A sealing assembly (101,102) according to any one of the preceding claims 1 to 9, wherein said first part (301) of said seat (30) comprises a front axial portion (91), an intermediate axial portion (92) and a rear axial portion (93), wherein each of said portions (91,92,93) identifies a respective outermost surface (94,92C, 50') and wherein a diameter (D92C) of the outermost cylindrical surface (92C) of said intermediate portion (92) is greater than a diameter (D50',D94) of the outermost surfaces of the other portions (91,93) of said first part (301) of said seat (30).

12. A sealing assembly (101,102) according to claim 11, wherein said intermediate axial portion (92) comprises a recess (40A) defined at said outermost surface (92C) and wherein an outer sealing ring (40) can be housed in said recess (40A).

13. A sealing assembly (101, 102), according to claim 12, wherein the outer sealing ring (40), preferably made of thermoplastic material, is housed in said recess (40A).

14. A sealing assembly according to any one of the preceding claims 11 to 13, wherein said rear axial portion (93) develops from said rear surface (92B) of said intermediate axial portion (92), and wherein said rear axial portion (93) comprises:
- a cylindrical outermost surface (50'), which develops from said rear surface (92B) of said intermediate axial portion (92), parallel to said central axis (A);
- a cylindrical innermost surface (50"), which develops coaxially to said outermost surface (50') of said rear axial portion (93);
- a shoulder surface (50"') which develops between said surface (50',50") of said rear axial portion (93) on a plane substantially orthogonal to said central axis (A), said shoulder surface (50'") and said innermost surface (50") defining a rear housing (80) in which ring-shaped rear sealing means (51,52',52") are accommodated, said housing (80) being frontally closed by said shoulder surface (50'").

15. A sealing assembly (101;102) according to any one of the claims 11 to 13, wherein said rear axial portion (93) comprises a cylindrical outermost surface (50') which develops from said rear surface (92B) of said intermediate axial portion (92), and wherein said rear axial portion (93) comprises a recess (99), at said outermost surface (50'), in which rear sealing means (51,52',52") can be housed.

16. A sealing assembly (101, 102) according to claim 14 or 15, wherein said sealing means comprise a first ring-shaped seal (51), a first anti-extrusion seal (52') and a second anti-extrusion seal (52") arranged on opposite sides of said ring-shaped seal (51).

17. A sealing assembly (101,102) according to claim 16, wherein said sealing means comprise a graphite ring-shaped seal (53).

18. A sealing assembly (101,102) according to any one of the preceding claims, wherein said sealing element (31) achieves the sealing between said seat (30) and said ball (10) at a sealing point (b) and wherein a reference axis (B) passing through said sealing point (b) and parallel to said central axis (A) identifies a front thrust surface on a vertical plane passing through the central axis (A), the front thrust surface being defined by a portion of said front surface of said seat (30) over said reference axis (B), and a rear thrust surface, said rear thrust surface being greater than said front thrust surface.

19. A ball valve **characterized in that** it comprises a sealing assembly (101,102) according to any one of the preceding claims.

## Patentansprüche

1. Dichtungsanordnung (101,102) für ein industrielles Kugelventil (1) aufweisend mindestens ein Ventilkörper (20) und eine Kugel (10), die in dem Ventilkörper (20) untergebracht ist, wobei die Dichtungsanordnung Folgendes umfasst:
- mindestens einen Sitz (30), der in den Ventilkörper (20) eingeführt werden kann, wobei der Sitz (30) sich um eine Mittelachse (A) entwickelt und einen axialen Hohlraum (35) für den Durchgang eines unter Druck stehenden Fluids definiert; der Sitz (30) einen ersten Teil (301) umfasst, der ein erstes Gehäuse (31A) an einer Vorderfläche definiert, die der Kugel (10) zugewandt ist, wenn der Sitz (30) in dem Ventilkörper (20) installiert ist; das erste Gehäuse (31A) eine geschlossene Bodenfläche (310) umfasst, die sich auf einer Ebene quer zur Mittelachse (A) entwickelt;
- ein aus thermoplastischem Material hergestellten Dichtungselement (31), um die Fluiddichtung zwischen dem Sitz (30) und der Kugel (10) des Ventils (1) zu erreichen, wobei das Dichtungselement (31) ringförmig ist und mit einem radialen Spiel (R) innerhalb des ersten Gehäuses (31A) untergebracht ist;
**dadurch gekennzeichnet, dass** das Dichtungselement (31) in Bezug auf den Sitz (30) entlang der Richtung parallel zur Mittelachse (A) schwimmt, wenn der Sitz (30) in dem Ventilkörper (20) installiert ist und wenn der Sitz (30) intern von der Druckflüssigkeit durchquert wird,
wobei das erste Gehäuse (31A) durch eine erste äußerste zylindrische Oberfläche (311) und durch eine innerste zylindrische Oberfläche (312) definiert ist, auf die jeweils eine äußerste Oberfläche (311A) und eine innerste Oberfläche (311B) des Dichtungselements (31) zugewandt sind, und wobei das Dichtungselement (31) ein kreisförmiges Gehäuse (32A) definiert, in dem ein Dichtungsring (32) untergebracht ist, um die Abdichtung zwischen der äußersten Oberfläche (311) des ersten Gehäuses (31A) und der äußersten Oberfläche (311A) des Dichtungselements (31) zu erreichen,
wobei der Sitz (30) einen zweiten Teil (302) umfasst, der direkt mit dem ersten Teil (301) verschraubt ist, wobei einer aus dem ersten Teil (301) oder dem zweiten Teil (302) einen Außengewindeabschnitt umfasst, der direkt in einen Innengewindeabschnitt des anderen Teils (301, 302) des Sitzes (30) eingeschraubt ist, und
wobei der zweite Teil (302) mindestens einen Anti-Extrusionsabschnitt (38) umfasst, der das Herausziehen des Dichtungselements (31) aus dem ersten Gehäuse (31A) zumindest während des Schrittes des Öffnens des Ventils (1) verhindert.

2. Dichtungsanordnung (101,102) nach Anspruch 1, wobei der zweite Teil (302) des Sitzes (30) einen axialen Abschnitt (302A) umfasst, der eine äußerste zylindrische Oberfläche (71) und eine innerste zylindrische Oberfläche (72) umfasst, der den Innengewindeabschnitt konfiguriert, wobei der erste Teil (301) des Sitzes (30) eine äußerste zylindrische Oberfläche (94) umfasst, die den Außengewindeabschnitt konfiguriert.

3. Dichtungsanordnung (101,102) nach Anspruch 2, wobei der zweite Teil (302) des Sitzes (30) einen radialen Abschnitt (302B) umfasst, der zwischen einer vorderen Querfläche (81) und einer hinteren Querfläche (82) definiert ist, die durch eine Innenfläche (83) verbunden sind, wobei die Querflächen (81,82) eine ringförmige Form aufweisen, die einen jeweiligen Innendurchmesser (D₈₁, D₈₂) identifiziert, wobei die Querflächen (81,82) so definiert sind, dass der Innendurchmesser (D₈₂) der Rückfläche (82) kleiner als der Innendurchmesser (D₈₁) der Vorderfläche (81) ist.

4. Dichtungsanordnung (101,102) nach Anspruch 3, wobei der Anti-Extrusionsabschnitt (38) nahe einer Kante (85) definiert ist, die zwischen der hinteren Querfläche (82) und der Innenfläche (83) des radialen Abschnitts (302B) des zweiten Teils (302) identifiziert wird.

5. Dichtungsanordnung (101,102) nach irgendeinem der vorhergehenden Ansprüche von 1 bis 4, wobei das Dichtungselement (31) umfassend eine Rückfläche (31'), die der Bodenfläche (310) des ersten Gehäuses (31A) zugewandt ist, und eine Vorderfläche (133A,B1,B2), die der Kugel (10) zugewandt ist, wenn der Sitz (30) in dem Ventilkörper (20) installiert ist; wobei die Vorderfläche einen ersten Abschnitt (133A), der in Bezug auf die Mittelachse (A) geneigt ist, um mit der Kugel (10) in Kontakt zu kommen, und einen dem ersten Abschnitt (133A) benachbarten zweiten Abschnitt (B1, B2) umfasst, und wobei der Anti-Extrusionsabschnitt (38) in einer Position austritt, die einem Oberflächenbereich (B2) des zweiten Abschnitts der Vorderfläche des Dichtungselements (31) zugewandt und von diesem beabstandet ist.

6. Dichtungsanordnung (101,102) nach Anspruch 5, wobei die innerste Oberfläche (311B) des Dichtungselements (31) Nuten (8) umfasst, die sich in axialer Richtung zwischen der Vorderfläche und der Rückfläche des Dichtungselements (31) und in radialer Richtung zu der äußersten Oberfläche (311A) des Dichtungselements (31) hin entwickeln.

7. Dichtungsanordnung (101,102) nach irgendeinem der vorhergehenden Ansprüche von 1 bis 6, wobei der Querschnittsbereich des ersten Gehäuses (31A) von 1% bis 5% größer als der Querschnittsbereich des Dichtungselements (31) ist und wobei die Querschnittsbereiche auf einer radialen Ebene bewertet werden, die im Wesentlichen orthogonal zur axialen Richtung (A) ist.

8. Dichtungsanordnung (101,102) nach irgendeinem der vorhergehenden Ansprüche von 1 bis 7, wobei der Querschnittsbereich des ersten Gehäuses (31A) von 1% bis 3% größer als der Querschnittsbereich des Dichtungselements (31) ist und wobei die Querschnittsbereiche auf einer radialen Ebene bewertet werden, die im Wesentlichen orthogonal zur axialen Richtung (A) ist.

9. Dichtungsanordnung (101,102) nach irgendeinem der vorhergehenden Ansprüche von 1 bis 8, wobei das Dichtungselement (31) aus einem Material hergestellt ist, das aus einer Gruppe bestehend aus PEEK, PA, PTFE, POM, PCTFE ausgewählt ist.

10. Dichtungsanordnung (101,102) nach irgendeinem der vorhergehenden Ansprüche von 1 bis 9, wobei der Dichtungsring (32) in die kreisförmige Aussparung (32A) eingesetzt ist, die durch das Dichtungselement definiert ist, das aus einer Gruppe ausgewählt ist, bestehend aus einem aus elastomerem Material hergestellten O-Ring, einem aus thermoplastischem Material hergestellten Lippendichtring und einem aus thermoplastischem Material hergestellten Doppellippendichtring.

11. Dichtungsanordnung (101,102) nach irgendeinem der vorhergehenden Ansprüche von 1 bis 9, wobei der erste Teil (301) des Sitzes (30) einen vorderen axialen Abschnitt (91), einen axialen Zwischenabschnitt (92) und einen hinteren axialen Abschnitt (93) umfasst, wobei jeder der Abschnitte (91,92,93) eine jeweilige äußerste Oberfläche (94,92C,50') identifiziert und wobei der Durchmesser (D92C) der äußersten zylindrischen Oberfläche (92C) des Zwischenabschnitts (92) größer als der Durchmesser (D50',D94) der äußersten Oberflächen der anderen Abschnitte (91,93) des ersten Teils (301) des Sitzes (30) ist.

12. Dichtungsanordnung (101,102) nach Anspruch 11, wobei der axiale Zwischenabschnitt (92) eine Aussparung (40A) umfasst, die an der äußersten Oberfläche (92C) definiert ist, und wobei ein äußerer Dichtungsring (40) in der Aussparung (40A) untergebracht sein kann.

13. Dichtungsanordnung (101,102) nach Anspruch 12, wobei der vorzugsweise aus thermoplastischem Material hergestellte äußere Dichtungsring (40) in der Aussparung (40A) untergebracht ist.

14. Dichtungsanordnung nach irgendeinem der vorhergehenden Ansprüche von 11 bis 13, wobei der hintere axiale Abschnitt (93) sich aus der hinteren Oberfläche (92B) des axialen Zwischenabschnitts (92) entwickelt, und wobei der hintere axiale Abschnitt (93) Folgendes umfasst:
- eine äußerste zylindrische Oberfläche (50'), die sich aus der hinteren Oberfläche (92B) des axialen Zwischenabschnitts (92) parallel zur Mittelachse (A) entwickelt;
- eine innerste zylindrische Oberfläche (50"), die sich koaxial zur äußersten Oberfläche (50') des hinteren axialen Abschnitts (93) entwickelt;
- eine Schulterfläche (50"'), die sich zwischen der Oberfläche (50',50") des hinteren axialen Abschnitts (93) auf einer Ebene entwickelt, die im Wesentlichen orthogonal zu der Mittelachse (A) ist, wobei die Schulterfläche (50"') und die innerste Oberfläche (50") ein hinteres Gehäuse (80) definieren, in dem ringförmige hintere Dichtungsmittel (51,52',52") untergebracht sind, und wobei das Gehäuse (80) durch die Schulterfläche (50"') frontal geschlossen ist.

15. Dichtungsanordnung (101,102) nach irgendeinem der Ansprüche von 11 bis 13, wobei der hintere axiale Abschnitt (93) eine äußerste zylindrische Oberfläche (50') umfasst, die sich aus der hinteren Oberfläche (92B) des axialen Zwischenabschnitts (92) entwickelt, und wobei der hintere axiale Abschnitt (93) eine Aussparung (99) an der äußersten Oberfläche (50') umfasst, in der die hinteren Dichtungsmittel (51,52',52") untergebracht sein können.

16. Dichtungsanordnung (101,102) nach Anspruch 14 oder 15, wobei die Dichtungsmittel eine erste ringförmige Dichtung (51), eine erste Anti-Extrusionsdichtung (52') und eine zweite Anti-Extrusionsdichtung (52") umfassen, die auf gegenüberliegenden Seiten der ringförmigen Dichtung (51) angeordnet sind.

17. Dichtungsanordnung (101,102) nach Anspruch 16, wobei die Dichtungsmittel eine ringförmige Graphitdichtung (53) umfassen.

18. Dichtungsanordnung (101,102) nach irgendeinem der vorhergehenden Ansprüche, wobei das Dichtungselement (31) die Abdichtung zwischen dem Sitz (30) und der Kugel (10) an einem Dichtungspunkt (b) erreicht und wobei eine Referenzachse (B), die durch den Dichtungspunkt (b) und parallel zur Mittelachse (A) verläuft, eine vordere Druckfläche in einer vertikalen Ebene, die durch die Mittelachse (A) verläuft, wobei die vordere Druckfläche durch einen Teil der Vorderfläche des Sitzes (30) über der Referenzachse (B) definiert ist, und eine hintere Druckfläche identifiziert, wobei die hintere Druckfläche größer als die vordere Druckfläche ist.

19. Ein Kugelventil, **dadurch gekennzeichnet, dass** es eine Dichtungsanordnung (101,102) nach irgendeinem der vorhergehenden Ansprüche umfasst

## Revendications

1. Ensemble d'étanchéité (101, 102) pour un robinet à tournant sphérique (1) industriel ayant au moins un corps de robinet (20) et un tournant sphérique (10) logé à l'intérieur dudit corps de robinet (20), ledit ensemble comprenant :
- au moins un siège (30) qui peut être inséré dans ledit corps de robinet (20), ledit siège (30) se développant autour d'un axe central (A) et définissant une cavité axiale (35) pour le passage d'un fluide pressurisé, ledit siège (30) comprenant une première partie (301) qui définit un premier logement (31A) en correspondance d'une surface avant tournée vers ledit tournant sphérique (10) lorsque ledit siège (30) est installé dans ledit corps de robinet (20), ledit premier logement (31A) comprenant une surface inférieure (310) fermée qui se développe sur un plan transversal audit axe central (A) ;
- un élément d'étanchéité (31), fait de matériau thermoplastique, pour obtenir l'étanchéité au fluide entre ledit siège (30) et ledit tournant sphérique (10) dudit robinet (1), ledit élément d'étanchéité (31) étant en forme de bague et disposé avec un jeu radial (R) à l'intérieur dudit premier logement (31A) ;
**caractérisé en ce que** ledit élément d'étanchéité (31) flotte par rapport audit siège (30), le long de la direction parallèle audit axe central (A) lorsque ledit siège (30) est installé dans ledit corps de robinet (20) et lorsque ledit siège (30) est traversé intérieurement par ledit fluide pressurisé,
dans lequel ledit premier logement (31A) est défini par une première surface cylindrique externe (311) et par une surface cylindrique interne (312) vers lesquelles une surface externe (311A) et une surface interne (311B) dudit élément d'étanchéité (31) font respectivement face, et dans lequel ledit élément d'étanchéité (31) définit un logement circulaire (32A) dans lequel une bague d'étanchéité (32) est disposée pour obtenir l'étanchéité entre la surface externe (311) dudit premier logement (31A) et ladite surface externe (311A) dudit élément d'étanchéité (31),
ledit siège (30) comprenant une deuxième partie (302) directement vissée à ladite première partie (301), dans lequel l'une parmi ladite première partie (301) ou ladite deuxième partie (302) comprend une portion filetée mâle qui est vissée directement sur une portion filetée femelle de l'autre desdites parties (301, 302) dudit siège (30), et
dans lequel ladite deuxième partie (302) comprend au moins une portion anti-extrusion (38) qui empêche l'extraction dudit élément d'étanchéité (31) dudit premier logement (31A), au moins lors de l'étape d'ouverture dudit robinet (1).

2. Ensemble d'étanchéité (101,102) selon la revendication 1, dans lequel ladite deuxième partie (302) dudit siège (30) comprend une portion axiale (302A), qui inclut une surface cylindrique externe (71) et une surface cylindrique interne (72), qui configure ladite portion filetée femelle, ladite première partie (301) dudit siège (30) comprenant une surface cylindrique externe (94) qui configure ladite portion mâle filetée.

3. Ensemble d'étanchéité (101, 102) selon la revendication 2, dans lequel ladite deuxième partie (302) dudit siège (30) comprend une portion radiale (302B) définie entre une surface transversale avant (81) et une surface transversale arrière (82) unies par une surface interne (83), dans lequel lesdites surfaces transversales (81,82) ont une forme annulaire qui identifie un diamètre interne respectif (D₈₁, D₈₂), lesdites surfaces transversales (81,82) étant définies de façon que le diamètre interne (D₈₂), de ladite surface arrière (82), est inférieur au diamètre interne (D₈₁), de ladite surface avant (81).

4. Ensemble d'étanchéité (101, 102) selon la revendication 3, dans lequel ladite portion anti-extrusion (38) est définie près d'un bord (85) identifié entre ladite surface transversale arrière (82) et ladite surface interne (83) de ladite portion radiale (302B) de ladite deuxième partie (302).

5. Ensemble d'étanchéité (101, 102) selon l'une quelconque des revendications précédentes 1 à 4, dans lequel ledit élément d'étanchéité (31) comprend une surface arrière (31') qui fait face à ladite surface inférieure (310) dudit premier logement (31A), et une surface avant (133A, B1, B2) qui fait face audit tournant sphérique (10) lorsque ledit siège (30) est installé dans ledit corps de robinet (20), ladite surface avant comprenant une première portion (133A) inclinée par rapport audit axe central (A) pour venir en contact avec ledit tournant sphérique (10), et une deuxième portion (B1, B2) adjacente à ladite première portion (133A), et dans lequel ladite portion anti-extrusion (38) émerge dans une position faisant face à et espacée d'une zone de surface (B2) de ladite deuxième portion de ladite surface avant dudit élément d'étanchéité (31).

6. Ensemble d'étanchéité (101, 102) selon la revendication 5, dans lequel ladite surface interne (311B) dudit élément d'étanchéité (31) comprend des rainures (8) qui se développent en direction axiale entre ladite surface avant et ladite surface arrière dudit élément d'étanchéité (31) et en direction radiale vers ladite surface externe (311A) dudit élément d'étanchéité (31).

7. Ensemble d'étanchéité (101, 102) selon l'une quelconque des revendications précédentes 1 à 6, dans lequel l'aire de section transversale dudit premier logement (31A) est de 1% à 5% supérieure à l'aire de section transversale dudit élément d'étanchéité (31) et dans lequel lesdites sections transversales sont évaluées sur un plan radial sensiblement orthogonal à ladite direction axiale (A).

8. Ensemble d'étanchéité (101, 102) selon l'une quelconque des revendications précédentes 1 à 7, dans lequel l'aire de section transversale dudit premier logement (31A) est de 1 % à 3% supérieure à l'aire de section transversale dudit élément d'étanchéité (31) et dans lequel lesdites sections transversales sont évaluées sur un plan radial sensiblement orthogonal à ladite direction axiale (A).

9. Ensemble d'étanchéité (101, 102) selon l'une quelconque des revendications précédentes 1 à 8, dans lequel ledit élément d'étanchéité (31) est fait d'un matériau choisi parmi un groupe composé de PEEK, PA, PTFE, POM, PCTFE.

10. Ensemble d'étanchéité (101, 102) selon l'une quelconque des revendications précédentes 1 à 9, dans lequel ladite bague d'étanchéité (32) est insérée dans ledit évidement circulaire (32A) défini par ledit élément d'étanchéité choisi parmi un groupe composé d'une bague de type O-ring faite de matériau élastomère, une bague de type à lèvre faite de matériau thermoplastique et d'une bague de type à double lèvre faite de matériau thermoplastique.

11. Ensemble d'étanchéité (101, 102) selon l'une quelconque des revendications précédentes 1 à 9, dans lequel ladite première partie (301) dudit siège (30) comprend une portion axiale avant (91), une portion axiale intermédiaire (92) et une portion axiale arrière (93), dans lequel chacune desdites portions (91, 92, 93) identifie une surface externe (94, 92C, 50') respective et dans lequel un diamètre (D92C) de la surface cylindrique externe (92C) de ladite portion intermédiaire (92) est supérieur à un diamètre (D50', D94) des surfaces externes des autres portions (91, 93) de ladite première partie (301) dudit siège (30).

12. Ensemble d'étanchéité (101, 102) selon la revendication 11, dans lequel ladite portion axiale intermédiaire (92) comprend un évidement (40A) défini en correspondance de ladite surface externe (92C) et dans lequel une bague d'étanchéité externe (40) peut être logée dans ledit évidement (40A).

13. Ensemble d'étanchéité (101, 102), selon la revendication 12, dans lequel la bague d'étanchéité externe (40), faite préférentiellement de matériau thermoplastique, est logée dans ledit évidement (40A).

14. Ensemble d'étanchéité selon l'une quelconque des revendications précédentes 11 à 13, dans lequel ladite portion axiale arrière (93) se développe à partir de ladite surface arrière (92B) de ladite portion axiale intermédiaire (92), et dans lequel ladite portion axiale arrière (93) comprend :
- une surface externe cylindrique (50'), qui se développe à partir de ladite surface arrière (92B) de ladite portion axiale intermédiaire (92), parallèle audit axe central (A) ;
- une surface interne cylindrique (50"), qui se développe coaxialement à ladite surface externe (50') de ladite portion axiale arrière (93) ;
- une surface d'épaulement (50"') qui se développe entre ladite surface (50',50") de ladite portion axiale arrière (93) sur un plan sensiblement orthogonal audit axe central (A), ladite surface d'épaulement (50"') et ladite surface interne (50") définissant un logement arrière (80) dans lequel des moyens d'étanchéité (51,52',52") en forme de bague sont disposés, ledit logement (80) étant fermé à l'avant par ladite surface d'épaulement (50"').

15. Ensemble d'étanchéité (101, 102) selon l'une quelconque des revendications 11 à 13, dans lequel ladite portion axiale arrière (93) comprend une surface externe cylindrique (50') qui se développe à partir de ladite surface arrière (92B) de ladite portion axiale intermédiaire (92), et dans lequel ladite portion axiale arrière (93) comprend un évidement (99), en correspondance de ladite surface externe (50'), dans lequel des moyens d'étanchéité arrière (51,52',52") peuvent être logés.

16. Ensemble d'étanchéité (101, 102) selon la revendication 14 ou 15, dans lequel lesdits moyens d'étanchéité comprennent un premier joint (51) en forme de bague, un premier joint anti-extrusion (52') et un deuxième joint anti-extrusion (52") disposés sur des côtés opposés dudit joint (51) en forme de bague.

17. Ensemble d'étanchéité (101, 102) selon la revendication 16, dans lequel lesdits moyens d'étanchéité comprennent un joint en graphite (53) en forme de bague.

18. Ensemble d'étanchéité (101, 102) selon l'une quelconque des revendications précédentes, dans lequel ledit élément d'étanchéité (31) obtient l'étanchéité entre ledit siège (30) et ledit tournant sphérique (10) en correspondance d'un point d'étanchéité (b) et dans lequel un axe de référence (B) passant à travers ledit point d'étanchéité (b) et parallèle audit axe central (A) identifie une surface de poussé avant sur un plan vertical passant à travers l'axe central (A), la surface de poussée avant étant définie par une portion de ladite surface avant dudit siège (30) au-dessus dudit axe de référence (B), et une surface de poussée arrière, ladite surface de poussée arrière étant supérieure à ladite surface de poussée avant.

19. Robinet à tournant sphérique **caractérisé en ce qu'**il comprend un ensemble d'étanchéité (101, 102) selon l'une quelconque des revendications précédentes.
